# EUROPÄISCHE PATENTSCHRIFT

(11) **EP 1 175 277 B1**
(45) Veröffentlichungstag und Bekanntmachung des Hinweises auf die Patenterteilung: **19.03.2003**
(21) Anmeldenummer: 00922559.0
(22) Anmeldetag: 27.03.2000
(51) Int. Cl.: B23Q 3/157, B23Q 3/155

(54) **ZWEISPINDELWERKZEUGMASCHINE MIT ZWEISCHEIBENMAGAZIN**
TWO-SPINDLE MACHINE TOOL WITH A DOUBLE DISC MAGAZINE
MACHINE-OUTIL A DEUX BROCHES DOTEE D'UN MAGASIN A DEUX DISQUES

(30) Priorität: 03.05.1999 DE 19920224
(43) Veröffentlichungstag der Anmeldung: 30.01.2002
(73) Patentinhaber: Alfing Kessler Sondermaschinen GmbH, 73433 Aalen (DE)
(72) Erfinder: STROBEL, Johann-Ludwig, D-73433 Aalen (DE); KRÜGER, Hans-Otto, D-73460 Hüttlingen (DE)
(74) Vertreter: HOFFMANN - EITLE
(86) Internationale Anmeldenummer: EP0002693
(87) Internationale Veröffentlichungsnummer: WO00066317

(56) Entgegenhaltungen:
- EP-A- 0 060 638
- CH-A- 673 607
- DE-A- 4 435 024
- DE-A- 19 503 482
- FR-A- 1 444 093
- FR-A- 2 767 729

## Beschreibung

Die vorliegende Erfindung betrifft eine Werkzeugmaschine gemäß dem Oberbegriff des Anspruchs 1.

### Stand der Technik

Aus der DE 28 12 200 C2 ist eine Werkzeugmaschine bekannt, die einen Spindelstock mit einer Arbeitsspindel umfasst. Die einzige Arbeitsspindel kann dabei wahlweise auf ein oder zwei Werkzeugmagazine in der Form von Magazinscheiben zugreifen. Die Werkzeugmagazine sind in horizontaler Richtung in Bezug auf den Spindelstock verschiebbar, so dass zur Aufnahme bzw. zum Ablegen eines Bearbeitungswerkzeuges die Magazinscheibe zu dem Spindelstock verfahren wird. Die verfahrbaren Magazinscheiben sind zur Gewährleistung einer ausreichenden Bearbeitungsfreiheit des Spindelstocks relativ weit voneinander entfernt positioniert. Eine kompakte Bauweise der Werkzeugmaschine ist dadurch nicht möglich.

Aus der DE 44 46 963 C2 ist eine programmgesteuerte Werkzeugmaschine offenbart, die ebenfalls nur eine Arbeitsspindel sowie zwei Tellermagazine umfasst. Die Tellermagazine sind dabei derart nebeneinander angeordnet, dass sich die Bearbeitungswerkzeuge in den Magazinen gerade nicht berühren. Ein Werkzeugwechsel der Arbeitsspindel erfolgt durch eine Bewegung der Arbeitsspindel in Richtung eines der Tellermagazine. Diese Bewegungsrichtung verläuft etwa 45° schräg zu der Vertikalen. Dort wird in einer leeren Aufnahme des Tellermagazins das alte Bearbeitungswerkzeug abgelegt und durch eine horizontale Bewegung zu dem gegenüberliegenden Tellermagazin kann ein neues Bearbeitungswerkzeug aus dem zweiten Tellermagazin entnommen werden, wonach die Arbeitsspindel wieder um 45° gegen die Vertikale geneigt zurückverfährt, um in ihre Ausgangsstellung zu gelangen. Die Aufnahmeöffnungen der Tellermagazine weisen bei beiden Tellermagazinen radial nach außen.

Weiterhin ist aus der gattungsbildenden DE 195 03 482 C2 eine Werkzeugmaschine mit zwei Spindelstöcken und jeweils einer Arbeitsspindel bekannt, die unabhängig voneinander verfahrbar sind. Oberhalb der beiden Arbeitsspindeln ist an dem Maschinenständer ein Werkzeugmagazin angeordnet, das als ein Umlaufkettenmagazin ausgebildet ist. Die Bearbeitungswerkzeuge sind in Aufnahmen des Umlaufmagazins gehalten, deren Aufnahmeöffnungen, vertikal nach unten weisen. Während eine der Spindeln das Werkstück bearbeitet, kann die andere Spindel durch vertikales Verfahren in dem Bereich des Umlaufmagazines einen Werkzeugwechsel vornehmen. Gegebenenfalls ist es auch möglich, dass beide Spindeln gleichzeitig ein Werkstück bearbeiten.

Bei bestimmten Bearbeitungsvorgängen können die Bearbeitungszeiten an den einzelnen Werkstücken relativ kurz sein. In solchen Fällen ist zwangsläufig ein häufiger Wechsel der Bearbeitungswerkzeuge notwendig. Aufgrund des gemeinsamen Werkzeugmagazins für beide Arbeitsspindeln kann dies dazu führen, dass vor einem Werkzeugwechsel an einer Spindel erst der Werkzeugwechsel an der anderen Spindel abgewartet werden muss. Derartige Wartevorgänge wirken sich negativ auf die gesamte Bearbeitungszeit eines Werkstückes aus. Im Falle einer Fehlfunktion oder eines Versagens des Werkzeugmagazins kann keine der beiden Spindeln einen Werkzeugwechsel vornehmen.

Die FR-A-2 767 729 offenbart eine Werkzeugmaschine, die einen Maschinenständer, zwei Spindelstöcke, eine Arbeitsspindel pro Spindelstock und einen im Bereich der Maschinenständeroberseite angeordneten Werkzeugspeicher umfasst. Dieser Werkzeugspeicher besteht aus zwei nebeneinander angeordneten Tellermagazinen. Die zwei Spindelstöcke dieser Werkzeugmaschine sind in horizontaler Richtung zusammen verschiebbar.

Aus der FR-A-1 444 093 ist eine Werkzeugmaschine bekannt, bei der ein Werkzeugmagazin mit zangenartigen Aufnahmen vorgesehen wird.

Schließlich ist aus der DE 197 08 096 A1 ein Bearbeitungszentrum bekannt, das mindestens eine Arbeitsspindel aufweist, die aus scheiben- oder tellerförmigen Werkzeugspeichern Bearbeitungswerkzeuge aufnimmt. Dabei sind die scheiben- oder tellerförmigen Werkzeugspeicher parallel zueinander und übereinander in Ebenen angeordnet, die parallel zu der Arbeitsspindel des Bearbeitungszentrums ausgerichtet sind. Die einzelnen Bearbeitungswerkzeuge können in den Werkzeugspeichern auch aus ihrer radialen Lage in Bezug zu dem Werkzeugspeicher versetzt positioniert sein.

### Darstellung der Erfindung

Der vorliegenden Erfindung liegt das technische Problem zugrunde, bei einer Zweispindelwerkzeugmaschine die Span-zu-Span-Zeit pro Spindel zu verkürzen, die Programmierung zu vereinfachen und eine kompakte Bauweise der Werkzeugmaschine zu ermöglichen.

Dieses technische Problem wird mit einer Werkzeugmaschine mit den Merkmalen des Patentanspruches 1 gelöst.

Der vorliegenden Erfindung liegt der Gedanke zugrunde, bei einer Zweispindelwerkzeugmaschine einen Werkzeugspeicher mit zwei voneinander unabhängigen Scheiben- oder Tellermagazinen vorzusehen. Die zangenartigen Aufnahmen der Scheiben- oder Tellermagazine sind dabei so an deren Umfangsbereich angeordnet, dass die Einschub- oder Entnahmerichtung nicht radial in Bezug auf die jeweiligen Scheiben- oder Tellermagazine ist. Dadurch wird erreicht, dass die Spindelstöcke und damit auch die Arbeitsspindeln relativ dicht nebeneinander angeordnet werden können, d.h. ihr Abstand vergleichsweise klein bemessen werden kann. Dieser geringe Abstand der Arbeitsspindeln bzw. der sie tragenden Spindelstöcke wiederum ermöglicht es, dass mit beiden Arbeitsspindeln der Arbeitsbereich der Werkzeugmaschine bezogen auf die X-Achse weitgehend überdeckt werden kann, ohne dass die Erstreckung der Werkzeugmaschine in der X-Richtung erheblich größer bemessen werden müßte. Wesentlich ist dabei ferner, dass dieser Vorteil ohne zusätzlichen mechanischen oder programmtechnischen Aufwand erzielbar ist, da die Bewegungsrichtung der Spindelstöcke bei einem Werkzeugwechsel im Wesentlichen auf eine einfache vertikale Bewegung beschränkt ist. Vorzugsweise sind die Scheiben- oder Tellermagazine derart dicht nebeneinander angeordnet, dass sich ihre Wirkkreislinien im Idealfall gerade nicht mehr berühren.

Bei einem Werkzeugwechsel kann jede der Arbeitsspindeln auf ein eigenes Werkzeugmagazin zugreifen, so dass die Span-zu-Span-Zeit pro Spindel erheblich reduziert werden kann. Die Programmierung einer derartigen Werkzeugmaschine wird durch die übersichtliche Werkzeuganordnung und dadurch, dass der ein Spindelstock zum Werkzeugwechsel jeweils nur eine Vertikal- und eine Horizontalbewegung ausführen muss, erheblich vereinfacht. Im Vergleich zu einem Ketten- oder Umlaufmagazin weisen zwei gesonderte Scheiben- oder Tellermagazine bei gleicher Anzahl der Bearbeitungswerkzeuge jeweils geringere bewegte Massen auf, wodurch höhere Umfangsgeschwindigkeiten am Magazin zugelassen werden können.

Vorzugsweise sind die beiden Scheiben- oder Tellermagazine so nebeneinander angeordnet, dass ihre Achsen parallel zueinander verlaufen. Die Achsen der beiden nebeneinander angeordneten Scheiben- oder Tellermagazine können aber auch in einem Winkel zueinander in einer gemeinsamen horizontalen Ebene angeordnet sein. Vorzugsweise liegen die Scheiben oder Teller der beiden nebeneinander angeordneten Magazine in einer Ebene. Diese Ebene verläuft vorzugsweise vertikal und senkrecht zu einer Ebene, in der die Spindelachsen liegen. Je nach Ausbildung der Werkzeugmaschine ist es allerdings auch denkbar, die Scheiben oder Teller der nebeneinander angeordneten Magazine versetzt hintereinander anzuordnen. Auf diese Weise könnte bei einem größeren Durchmesser der einzelnen Scheiben- oder Tellermagazine trotzdem eine kompakte Bauweise der Werkzeugmaschine realisiert werden.

Nach einer bevorzugten Ausführungsform der vorliegenden Erfindung sind die zangenartigen Aufnahmen derart am jeweiligen Umfangsbereich der Scheiben- oder Tellermagazine angeordnet, dass die Einschubrichtung der Bearbeitungswerkzeuge in die zangenartigen Aufnahmen jeweils in einem stumpfen Winkel von 90° bis 170° zur Verbindungslinie zwischen der Drehachse des jeweiligen Scheiben- oder Tellermagazins und der Achse des jeweils in der zangenartigen Aufnahme ruhenden Bearbeitungswerkzeuges verläuft. Besonders bevorzugt wird ein stumpfer Winkel zwischen 100° und 160°. Der individuelle Winkel ergibt sich für eine Werkzeugmaschine aus weiteren Parametern der Werkzeugmaschine, wie Abstand zwischen den Arbeitsspindeln und Durchmesser der Scheiben- oder Tellermagazine.

Vorzugsweise können die Scheiben oder Teller der Magazine direkt auf den Antrieb einer NC-Achse aufgesetzt werden, wodurch die Anzahl der Bauteile deutlich reduziert wird und die Funktionssicherheit erhöht wird, da auch die Anzahl der Verschleißteile reduziert wird.

Nach einer weiteren Ausführungsform der vorliegenden Erfindung sind die beiden nebeneinander angeordneten Scheiben- oder Tellermagazine in einer horizontalen Ebene senkrecht zu den Spindelachsen verschiebbar oder schwenkbar gelagert. Eine derartige Lagerung kann beispielsweise eine Linearführung oder einen Schwenkhebel umfassen. Durch die verschiebbare oder schwenkbare Lagerung der Scheiben- oder Tellermagazine wird es zusätzlich möglich, dass beide Arbeitsspindeln nicht nur auf das ihnen jeweils zugeordnete Scheiben- oder Tellermagazin, sondern auf beide Magazine zugreifen können. So kann die Anzahl der vorzuhaltenden Verarbeitungswerkzeuge reduziert werden, wodurch sich auch der für die Scheiben- oder Tellermagazine benötigte Bauraum reduziert. Ferner ist es für den Fall, dass bei einem der beiden Scheiben- oder Tellermagazine eine Funktionsstörung vorliegt, weiterhin möglich, dass entweder eine oder beide Arbeitsspindeln mit Bearbeitungswerkzeugen versorgt werden können.

### Kurze Beschreibung der Zeichnungen

Im Folgenden wird die vorliegende Erfindung anhand der beigefügten Zeichnungen näher erläutert und beschrieben. Es zeigen:
- Fig. 1: eine erfindungsgemäße Werkzeugmaschine mit zwei Arbeitsspindeln und zwei Scheiben- oder Tellermagazinen;
- Fig. 2: eine vergrößerte Darstellung eines Ausschnittes aus Fig. 1.

### Beschreibung einer Ausführungsform der Erfindung

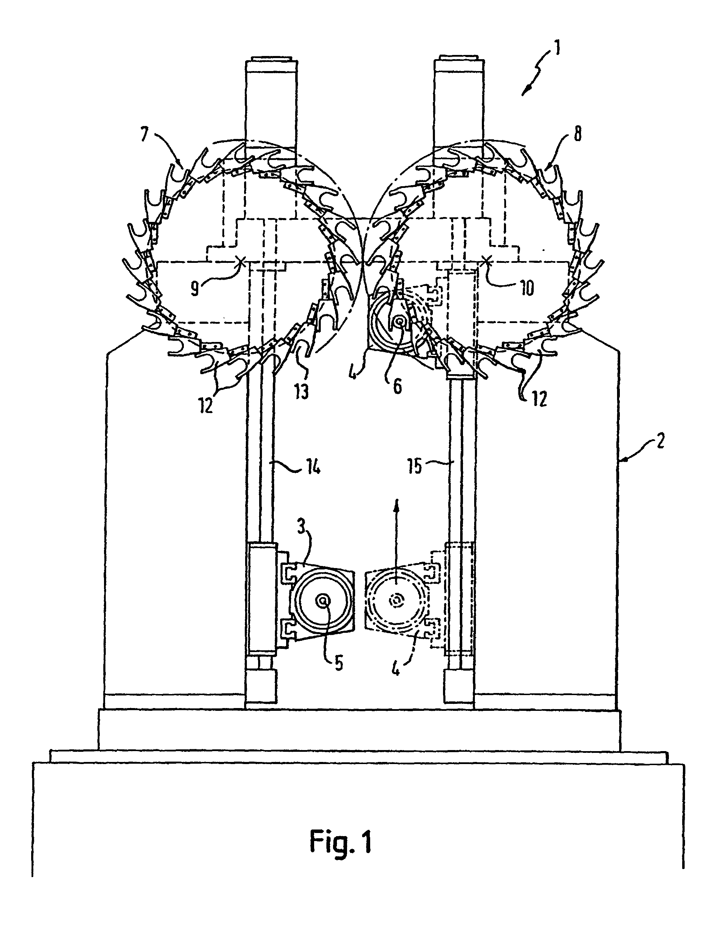

In Fig. 1 ist schematisch eine Werkzeugmaschine 1 gemäß der vorliegenden Erfindung dargestellt. Die X-Achse der Maschine ist zum besseren Verständnis der Achslagen im unteren Teil der Maschine angegeben. Der Werkzeugtisch, auf dem das zu bearbeitende Werkstück angeordnet wird, ist der besseren Übersichtlichkeit halber nicht dargestellt. Die Werkzeugmaschine 1 umfasst einen Maschinenständer 2 sowie zwei Spindelstöcke 3, 4, die an dem Maschinenständer 2 unabhängig voneinander in vertikaler und in horizontaler Richtung bewegbar sind. Jeder der Spindelstöcke 3, 4 umfasst eine Arbeitsspindel 5, 6, die in dem Spindelstock horizontal angeordnet und mit diesem horizontal verschiebbar ist. An der Oberseite des Maschinenständers 2 befindet sich ein Werkzeugspeicher 7, 8, der aus zwei Scheiben- oder Tellermagazinen 7, 8 gebildet ist. In der in Fig. 1 gezeigten Ausführungsform sind die beiden Scheiben- oder Tellermagazine 7, 8 unmittelbar nebeneinander angeordnet und die Achsen 9, 10 der Scheiben- oder Tellermagazine 7, 8 verlaufen parallel zueinander. Die Achsen 9, 10 verlaufen in einer gemeinsamen horizontalen Ebene und auch die Scheiben oder Teller der beiden Magazine 7, 8 liegen in einer gemeinsamen Ebene. Diese letztgenannte Ebene verläuft vertikal und senkrecht zu der Ebene, in der Spindelachsen liegen.

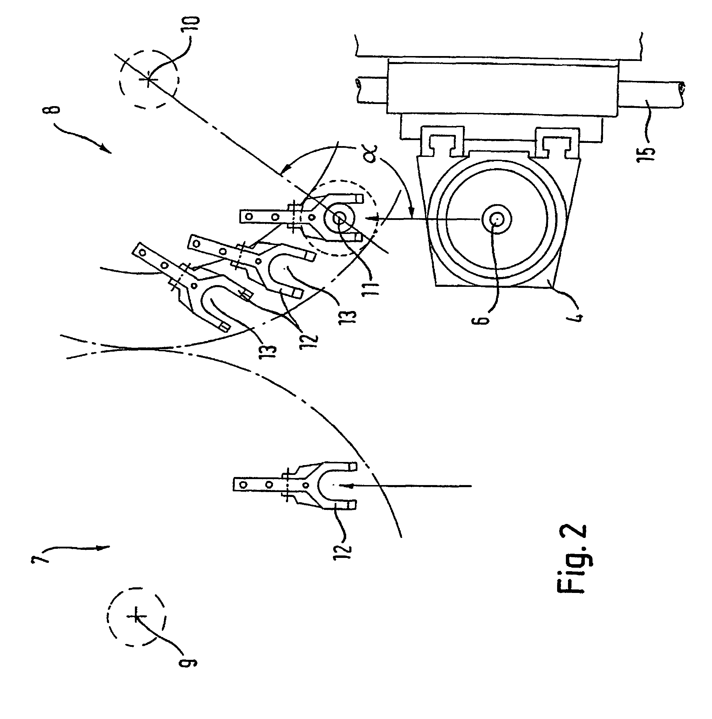

Die beiden Scheiben- oder Tellermagazine 7, 8 des Werkzeugspeichers liegen so dicht beieinander, dass, wie in Fig. 2 ersichtlich, sich die äußeren strichpunktiert gezeigten Umfangslinien der beiden Scheiben- oder Tellermagazine 7, 8, die den äußersten Umfangsbereich der in den beiden Magazinen angeordneten Bearbeitungswerkzeuge 11 markieren, gerade nicht berühren. Die Bearbeitungswerkzeuge 11 sind in den Scheibenoder Tellermagazinen in zangenartigen Werkzeugaufnahmen 12 gehalten, die einen Werkzeugwechsel nach der bekannten sogenannten Pick-up-Technik ermöglichen. Wie in den Fig. 1 und 2 dargestellt, sind die Aufnahmeöffnungen 13 der zangenartigen Aufnahmen 12 für die Bearbeitungswerkzeuge 11 in Bezug auf die Scheiben- oder Tellermagazine 7, 8 nicht radial angeordnet. Vielmehr sind die Aufnahmeöffnungen 13 der zangenartigen Aufnahmen 12 schräg in den Scheiben- oder Tellermagazinen 7, 8 positioniert, so dass die Einschubrichtung der Bearbeitungswerkzeuge 11 in die zangenartigen Aufnahmen 12 jeweils in einem stumpfen Winkel α zur Verbindungslinie zwischen der Achse 9 bzw. 10 des jeweiligen Scheiben- oder Tellermagazines 7, 8 und der Achse des jeweils in der zangenartigen Aufnahme 12 ruhenden Bearbeitungswerkzeuges 11 verläuft. Der in Fig. 2 angedeutete Winkel α beträgt bei der vorliegenden Ausführungsform etwa 145°.

Im Folgenden wird nun ein Werkzeugwechsel anhand der dargestellten Ausführungsform rein beispielhaft erläutert.

Befindet sich in einer der beiden Arbeitsspindeln 5 bzw. 6 ein Bearbeitungswerkzeug, das ausgewechselt werden soll, so verfährt der Spindelstock 3 bzw. 4 an der entsprechenden Säule 14 bzw. 15 des Maschinenständers 2 vertikal nach oben. Das entsprechende Scheiben- oder Tellermagazin 7 oder 8 befindet sich in dieser Phase in einer Stellung, in der eine leere zangenartige Aufnahme 12 vertikal oberhalb der Arbeitsspindel mit nach unten geöffneter Aufnahmeöffnung 13 angeordnet ist. Durch die Verfahrbewegung des jeweiligen Spindelstockes wird das Bearbeitungswerkzeug 11 in die Aufnahmeöffnung 13 eingeschoben und der Spindelstock nach einer Entriegelung zurückgezogen. Auf diese Weise ist das auszuwechselnde Werkzeug in der zangenartigen Aufnahme 12 abgelegt.

Das Scheiben- oder Tellermagazin wird dann derart gedreht, dass die zangenartige Aufnahme mit dem nächsten Bearbeitungswerkzeug vor der in dieser Phase leeren Arbeitsspindel angeordnet ist. Im Pick-up-Verfahren wird nun dieses Bearbeitungswerkzeug durch Vorschieben von der Arbeitsspindel aufgenommen, die dann an der Säule vertikal nach unten verfährt, um ein nicht gezeigtes Werkstück zu bearbeiten.

Der Werkzeugwechsel kann für beide Arbeitsspindeln unabhängig voneinander gleichzeitig oder zeitversetzt stattfinden. Auch die beiden Scheiben- oder Tellermagazine 7, 8 sind unabhängig voneinander bewegbar, so dass keine Wartezeiten bei einem Werkzeugwechsel entstehen. Durch die um den Winkel α schräge Anordnung der zangenartigen Aufnahmen 12 der Scheiben- oder Tellermagazine 7, 8 können die Spindelstöcke 3 und 4 relativ dicht nebeneinander angeordnet werden, wodurch sich ein relativ geringer Abstand der Säulen 14 und 15 in Folge dessen eine geringe Breite der Werkzeugmaschinen ergibt.

Nach einer nicht dargestellten Ausführungsform der vorliegenden Erfindung können die beiden Scheiben- oder Tellermagazine 7, 8 auch in horizontaler Richtung verschiebbar oder verschwenkbar gelagert sein, so dass ein Zugriff beider Arbeitsspindeln 5, 6 auf jeweils beide der Scheiben- oder Tellermagazine 7, 8 möglich ist. Die Lagerung der Scheiben- oder Tellermagazine 7, 8 könnte dabei über eine Linearführung oder einen Schwenkhebel realisiert werden.

## Patentansprüche

1. Werkzeugmaschine,
- mit einem Maschinenständer (2) mit zwei vertikalen Säulen (14, 15),
- zwei Spindelstöcken (3, 4), die an dem Maschinenständer (2) unabhängig voneinander auf einander gegenüberliegenden Seiten der Säulen des Ständers in vertikaler Richtung auf- und abbewegbar und in horizontaler Richtung verschiebbar sind,
- einer Arbeitsspindel (5, 6) pro Spindelstock, die in diesem jeweils horizontal angeordnet ist,
- sowie einem im Bereich der Maschinenständeroberseite angeordneten Werkzeugspeicher, der im Bereich seines Umfanges eine Anzahl von zangenartigen Aufnahmen (12) für in diese einschiebbare Bearbeitungswerkzeuge (11) aufweist, wobei die zangenartigen Aufnahmen (12) derart angeordnet sind, daß die Bearbeitungswerkzeuge (11) von den Werkzeugspindeln (5, 6) in Pick-up-Technik aus dem Werkzeugspeicher unmittelbar entnehmbar und in diesem ablegbar sind,
**dadurch gekennzeichnet, daß**
der Werkzeugspeicher aus zwei nebeneinander angeordneten, mit ihren Umfangsbereichen dicht aneinanderschließenden Scheiben- oder Tellermagazinen (7, 6) besteht und die zangenartigen Aufnahmen (12) derart am jeweiligen Umfangsbereich angeordnet sind, daß die Einschubrichtung der Bearbeitungswerkzeuge (11) in die zangenartigen Aufnahmen (12) jeweils in einem stumpfen Winkel (α) zur Verbindungslinie zwischen der Drehachse (9, 10) des jeweiligen Scheiben- oder Tellermagazines (7, 8) und der Achse des jeweils in der zangenartigen Aufnahme (12) ruhenden Bearbeitungswerkzeuges (11) verläuft.

2. Werkzeugmaschine nach Anspruch 1, **dadurch gekennzeichnet, daß** die Achsen (9, 10) der beiden nebeneinander angeordneten Scheiben- oder Tellermagazine (7, 8) parallel verlaufen.

3. Werkzeugmaschine nach Anspruch 1 oder 2, **dadurch gekennzeichnet, daß** die Achsen (9, 10) der beiden nebeneinander angeordneten Scheiben- oder Tellermagazine (7, 8) in einer gemeinsamen horizontalen Ebene angeordnet sind.

4. Werkzeugmaschine nach Anspruch 1, 2 oder 3, **dadurch gekennzeichnet, daß** die Scheiben oder Teller der beiden nebeneinander angeordneten Magazine (7, 8) in einer Ebene liegen.

5. Werkzeugmaschine nach Anspruch 4, **dadurch gekennzeichnet, daß** die Ebene der Scheiben oder Teller vertikal und senkrecht zu einer Ebene verläuft, in der die Spindelachsen liegen.

6. Werkzeugmaschine nach einem oder mehreren der Ansprüche 1 bis 5, **dadurch gekennzeichnet, daß** der stumpfe Winkel (α) zwischen 90° und 170° beträgt.

7. Werkzeugmaschine nach einem oder mehreren der Ansprüche 1 bis 5, **dadurch gekennzeichnet, daß** der stumpfe Winkel (α )zwischen 100° und 160° beträgt.

8. Werkzeugmaschine nach einem oder mehreren der Ansprüche 1 bis 5, **dadurch gekennzeichnet, daß** der stumpfe Winkel (α) ca. 145° beträgt.

9. Werkzeugmaschine nach einem oder mehreren der Ansprüche 1 bis 5, **dadurch gekennzeichnet, daß** die Scheiben oder Teller der Magazine (7, 8) jeweils direkt auf den Antrieb einer NC-Achse aufgesetzt sind.

10. Werkzeugmaschine nach einem oder mehreren der Ansprüche 1 bis 9, **dadurch gekennzeichnet, daß** die beiden nebeneinander angeordneten Scheiben- oder Tellermagazine (7, 8) in einer horizontalen Ebene senkrecht zu den Spindelachsen verschiebbar oder verschwenkbar gelagert sind.

11. Werkzeugmaschine nach Anspruch 10, **dadurch gekennzeichnet, daß** die Lagerung eine Linearführung umfasst.

12. Werkzeugmaschine nach Anspruch 10, **dadurch gekennzeichnet, daß** die Lagerung einen Schwenkhebel umfaßt.

## Claims

1. Machine tool
- with a machine stand (2) with two vertical columns (14, 15),
- two headstocks (3, 4), which can be moved up and down in the vertical direction independently of one another on mutually opposite sides of the columns of the stand and can be displaced in the horizontal direction,
- one work spindle (5, 6) per headstock, arranged horizontally therein in each case,
- and a tool store arranged in the region of the upper side of the machine stand and having in the region of its circumference a number of pincer-like receivers (12) for therein insertable machining tools (11), wherein the pincer-like receivers (12) are arranged in such a way that the machining tools (11) can be removed directly from the tool store and deposited therein by the tool spindles (5, 6) by pick-up techniques,
**characterised in that** the tool store consists of two disc or plate magazines (7, 6) *(sic)* closely adjoining one another with their circumferential regions and the pincer-like receivers (12) are arranged on the respective circumferential region in such a way that the insertion direction of the machining tools (11) into the pincer-like receivers (12) runs in each case at an obtuse angle (α) to the connecting line between the axis of rotation (9, 10) of the respective disc or plate magazine (7, 8) and the shaft of the machining tool (11) resting in the pincer-like receiver (12) in each case.

2. Machine tool according to claim 1, **characterised in that** the axes (9, 10) of the two disc or plate magazines (7, 8) arranged next to one another run parallel.

3. Machine tool according to claim 1 or 2, **characterised in that** the axes (9, 10) of the two disc or plate magazines (7, 8) arranged next to one another are arranged in a common horizontal plane.

4. Machine tool according to claim 1, 2 or 3, **characterised in that** the discs or plates of the two magazines (7, 8) arranged next to one another lie in one plane.

5. Machine tool according to claim 4, **characterised in that** the plane of the discs or plates runs vertical and perpendicular to a plane in which the spindle axes lie.

6. Machine tool according to one or more of claims 1 to 5, **characterised in that** the obtuse angle (α) is between 90° and 170 .

7. Machine tool according to one or more of claims 1 to 5, **characterised in that** the obtuse angle (α) is between 100 and 160 .

8. Machine tool according to one or more of claims 1 to 5, **characterised in that** the obtuse angle (α) is approx. 145 .

9. Machine tool according to one or more of claims 1 to 5, **characterised in that** the discs or plates of the magazines (7, 8) are in each case placed directly on to the drive of an NC shaft.

10. Machine tool according to one or more of claims 1 to 9, **characterised in that** the two disc or plate magazines (7, 8) arranged next to one another are mounted as displaceable or swivellable in a horizontal plane perpendicular to the spindle axes.

11. Machine tool according to claim 10, **characterised in that** the mounting comprises a linear guide.

12. Machine tool according to claim 10, **characterised in that** the mounting comprises a swivel lever.

## Revendications

1. Machine-outil
- avec un support machine (2), muni de deux colonnes (14, 15) verticales,
- deux porte-broche ou poupées (3, 4) déplaçables sur le support machine (2), de façon à être levés et abaissés en direction verticale et déplaçables en direction horizontale, indépendamment l'un de l'autre, sur des côtés opposés des colonnes du support,
- une broche de travail (5, 6) par porte-broche, disposée chaque fois horizontalement dans celui-ci,
- ainsi qu'un stockage d'outil disposé dans la zone de la face supérieur du support machine, stockage d'outil présentant dans la zone de sa périphérie une pluralité de logements (12) en forme de pinces, pour des outils d'usinage (11) susceptible d'y être introduits, les logements (12) du genre de pinces étant disposés de manière que les outils d'usinage (11) puissent être directement prélevés par les broches à outils (5, 6) hors du stockage à outil et être déposés dans celui-ci, dans la technique pick-up,
**caractérisée en ce que**
le stockage d'outil est formé de deux magasins en disques ou plateaux (7, 6) adjacents se raccordant intimement l'un à l'autre dans des zones périphériques et les logements (12) du genre de pinces étant disposés sur la zone périphérique respective, de manière que la direction d'introduction des outils d'usinage (11) dans les logements (12) du genre de pinces s'étende chaque fois sous un angle obtus (α) par rapport à la ligne de liaison tracée entre l'axe de rotation (9, 10) du magasin à disques ou plateaux (7, 8) respectif et l'axe de l'outil d'usinage (11) reposant chaque fois dans le logement (12) du genre de pinces.

2. Machine-outil selon la revendication 1, **caractérisée en ce que** les axes (9, 10) des deux magasins à disques ou à plateaux (7, 8) disposés l'un à côté de l'autre sont parallèles.

3. Machine-outil selon la revendication 1 ou 2, **caractérisée en ce que** les axes (9, 10) des deux magasins à disques ou à plateaux (7, 8) disposés l'un à côté de l'autre sont disposés dans un plan horizontal commun.

4. Machine-outil selon la revendication 1, 2 ou 3, **caractérisée en ce que** les disques ou plateaux des deux magasins (7, 8) disposés l'un à côté de l'autre sont situés dans le même plan.

5. Machine-outil selon la revendication 4, **caractérisée en ce que** le plan des disques ou plateaux s'étend verticalement et perpendiculairement à un plan dans lequel se trouvent les axes de broches.

6. Machine-outil selon l'une ou plusieurs des revendications 1 à 5, **caractérisée en ce que** l'angle obtus (α) est compris entre 90° et 170°.

7. Machine-outil selon l'une ou plusieurs des revendications 1 à 5, **caractérisée en ce que** l'angle obtus (α) est compris entre 100° et 160°.

8. Machine-outil selon l'une ou plusieurs des revendications 1 à 5, **caractérisée en ce que** l'angle obtus (α) est d'environ 145°.

9. Machine-outil selon l'une ou plusieurs des revendications 1 à 5, **caractérisée en ce que** les disques ou plateaux des magasins (7, 8) sont posés chaque fois directement sur l'entraînement d'un axe de commande numérique NC.

10. Machine-outil selon l'une ou plusieurs des revendications 1 à 9, **caractérisée en ce que** les deux magasins à disques ou plateaux (7, 8), disposés l'un à côté de l'autre, sont montés en palier de façon à pouvoir être déplacés ou pivotés dans un plan horizontal, perpendiculairement aux axes de broche.

11. Machine-outil selon la revendication 10, **caractérisée en ce que** le montage en palier comprend un guidage linéaire.

12. Machine-outil selon la revendication 10, **caractérisée en ce que** le montage en palier comprend un levier pivotant.
